# DEMANDE DE BREVET EUROPEEN

(11) **EP 0 644 080 A1**
(43) Date de publication de la demande: **22.03.1995**
(21) Numéro de dépôt: 94401618.7
(22) Date de dépôt: 12.07.1994
(51) Int. Cl.: B60N 2/04, B60N 2/12

(54) **Glissière à condamnation, notamment pour sièges de véhicules automobiles**

(30) Priorité: 16.09.1993 FR 9311056
(71) Demandeur: CESA COMPAGNIE EUROPEENNE DE SIEGES POUR AUTOMOBILES, F-92307 Levallois-Perret Cédex (FR)
(72) Inventeur: Beaulande, Joel, F-45200 Montargis (FR); Quenel, David, F-45500 Gien (FR)
(74) Mandataire: Polus, Camille

(57) **Abrégé**

La glissière comprend, notamment, un élément fixe (10), un élément mobile (20), un verrou (30) avec une gâche (31) et un pène (32), un dispositif de condamnation (40) et une commande (50).

Le dispositif de condamnation (40) coopère avec l'élément fixe (10) et le pène (32) pour bloquer le pène lorsqu'il est verrouillé sur la gâche et accouplé à l'élément mobile.

Application aux glissières pour sièges de véhicules automobiles terrestres où l'élément mobile sert de mémoire pour replacer automatiquement le siège dans sa position de réglage antérieure.

## Description

La présente invention concerne les glissières comprenant un élément fixe et un élément mobile aptes à coulisser relativement l'un à l'autre selon une direction de translation et, plus particulièrement, une glissière perfectionnée à condamnation utilisable notamment pour un siège de véhicule automobile, par exemple, terrestre.

Comme on le sait, les sièges de véhicules automobiles terrestres sont, habituellement, montés sur le sol ou plancher d'un véhicule qui les reçoit par l'entremise de glissières le plus souvent latérales. Ces glissières latérales autorisent un réglage longitudinal du siège qui permet à son occupant de choisir la position adaptée à sa morphologie et à la géométrie du véhicule, qui lui assure le maximum de confort pour y voyager ou bien pour piloter le véhicule selon son style de conduite.

Certaines de ces glissières sont équipées d'une "mémoire" qui sert de butée réglable dont la localisation est fixée en fonction de la position de réglage du siège adoptée par son occupant. Ces glissières à mémoire sont habituellement utilisées dans les véhicules à deux portes latérales, notamment du type "coupé" ou "cabriolet" par exemple. Comme on le sait, pour ce type de véhicule, il est nécessaire de déplacer un siège avant pour accéder au volume situé à l'arrière des sièges avant. Le plus souvent, ce déplacement consiste au moins en une avance du siège en direction de l'avant ou du tableau de bord du véhicule, à fond de course des glissières. Lors de la remise en place du siège on n'est pas certain que celui-ci reprenne automatiquement sa position de réglage antérieure choisie qu'il occupait précédemment. Ceci est particulièrement désagréable et malcommode lorsqu'il s'agit du siège du conducteur, puisqu'à chaque fois le conducteur doit s'assurer de la position reprise par le siège et, au besoin, la retoucher. Pour éviter ce type d'inconvénient, on utilise des glissières à mémoire. Les glissières à mémoire fonctionnent d'une manière telle qu'une fois le réglage en position longitudinale du siège fait selon les souhaits de son occupant, lorsqu'on avance le siège pour donner accès à l'arrière de celui-ci et qu'on recule ensuite le siège pour y prendre place par exemple, le siège retrouve automatiquement la position antérieure dans laquelle il avait été placé.

Une glissière à mémoire est, par exemple, décrite dans le document FR 2 631 592 auquel on pourra se reporter utilement pour plus amples informations.

Que les glissières de sièges soient ou non à mémoire, elles sont soumises à des efforts importants, en particulier lorsque le siège est équipé d'une ceinture de sécurité du type totalement ou partiellement "embarqué". L'expression "ceinture embarquée" désigne habituellement une ceinture de sécurité dont les points d'ancrage, habituellement trois, sont tels que l'un au moins d'entre eux n'est pas solidaire de la coque ou structure du véhicule comme cela est généralement le cas, mais au contraire est ancré directement ou indirectement sur le siège. Pour un siège équipé d'une ceinture de sécurité embarquée, les efforts que doit subir et transmettre la ceinture de sécurité en cas de choc à grande composante longitudinale, repérée par rapport au véhicule, sont donc répercutés à la structure du véhicule, par exemple à son plancher, par l'entremise des glissières. On comprend immédiatement que les glissières qui supportent le siège et qui sont interposées entre celui-ci et le plancher doivent pouvoir subir non seulement les efforts normaux liés au réglage et à l'occupation du siège, mais aussi ceux exceptionnels qui résultent de tels chocs, sans que pour autant la sécurité de son occupant soit compromise.

Ce type de problème est particulièrement délicat à résoudre lorsqu'on sait que, pour des raison d'encombrement, de poids et de coûts de production, de telles glissières doivent être de dimensions particulièrement réduites, d'une petite masse et d'un prix de revient modique, et pourtant satisfaire aux normes de sécurité édictées par des organismes professionnels ou les Pouvoirs Publics.

Le but de l'invention est de construire une glissière perfectionnée à condamnation, notamment pour sièges de véhicules automobiles terrestres qui convienne notamment pour un siège équipé d'une ceinture de sécurité au moins partiellement embarquée.

L'invention a pour objet une glissière, notamment pour sièges de véhicules automobiles terrestres comprenant un élément fixe et un élément mobile aptes à coulisser relativement selon une direction de translation, un verrou avec une gâche qui est associée à l'élément fixe et avec un pène qui coopère d'une part avec la gâche pour s'y verrouiller ou s'en déverrouiller et, d'autre part, avec l'élément mobile pour s'y accoupler ou s'en désaccoupler et qui est mobile dans un plan, d'une part pratiquement orthogonalement à cette direction entre une position normalement verrouillée où il est en prise avec la gâche et une position déverrouillée où il est dégagé de la gâche et, d'autre part, parallèlement à cette direction lorsqu'il est à la fois en position déverrouillée et accouplé à l'élément mobile afin d'être déplacé avec lui de manière à pouvoir servir de butée réglable à l'élément mobile lorsqu'il est à la fois en position verrouillée et désaccouplé de ce dernier, et une commande reliée à l'élément mobile et agissant sur le pène de manière à volonté pouvoir déverrouiller le pène normalement verrouillé sur la gâche et pouvoir accoupler et désaccoupler le pène et l'élément mobile. Cette glissière est remarquable en ce qu'elle comprend un dispositif de condamnation apte à coopérer avec l'élément fixe et avec le pène pour bloquer le pène lorsqu'il est à la fois verrouillé sur la gâche et accouplé à l'élément mobile.

D'autres caractéristiques de l'invention apparaîtront à la lecture de la description et des revendications qui suivent, ainsi qu'à l'examen du dessin annexé donné seulement à titre d'exemple, où :

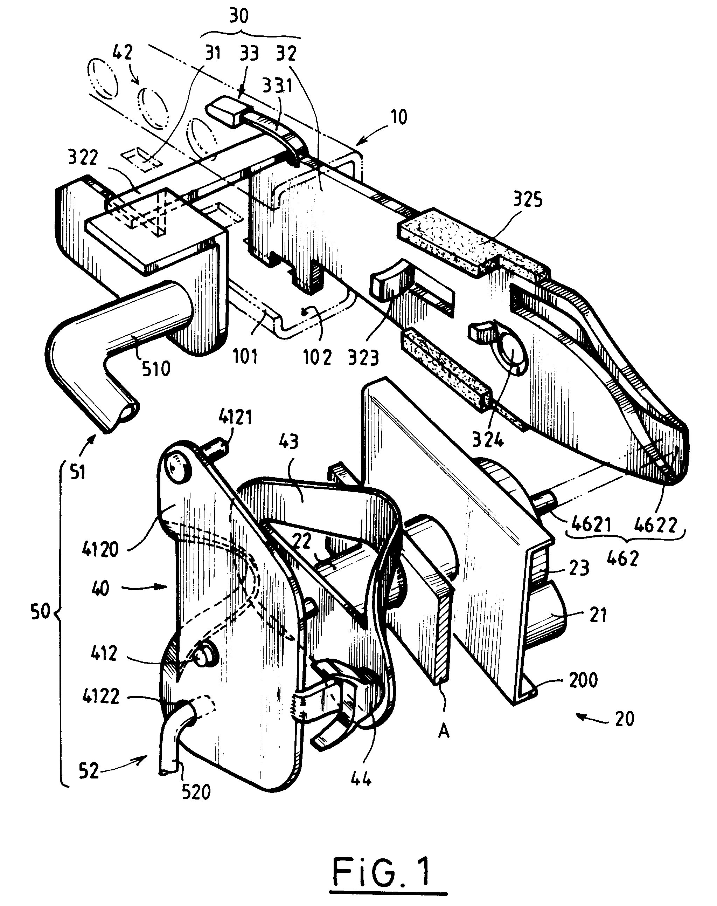

- la Fig. 1 est une vue perspective partielle schématique éclatée d'un mode de réalisation d'une glissière selon l'invention, représentée en position de fonctionnement ;

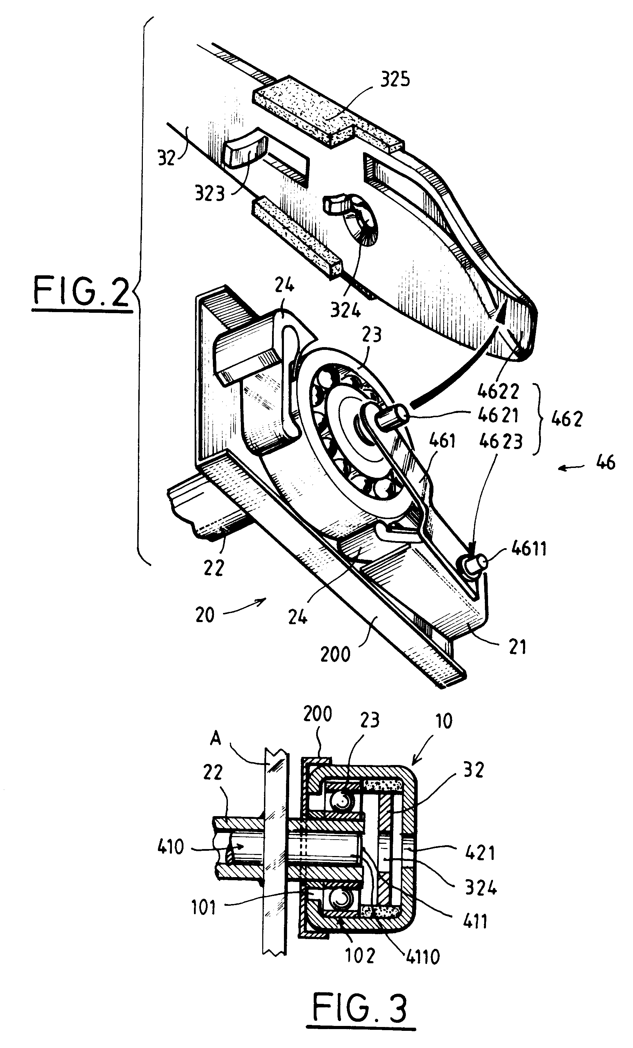

- la Fig. 2 est une vue perspective partielle de la Fig. 1 dont des constituants coopérant sont illustrés retournés pour en montrer des détails qui autrement seraient masqués ;
- la Fig. 3 est une coupe locale transversale de la glissière de la Fig. 1 assemblée ;
- La Fig. 4 est une coupe longitudinale de la glissière de la Fig. 1 assemblée dont un constituant est en position saillie de condamnation ;
- la Fig. 5 est une vue analogue à celle de la Fig. 3 où ce consituant est en position de retrait intermédiaire de réglage ;
- la Fig. 6 est une vue similaire à celle de la Fig. 3 où ce constituant est en position escamotée d'effacement ; et
- les Fig. 7A, 7B et 7C sont des vues partielles schématiques de la glissière de la Fig. 1 dans trois phases différentes de son fonctionnement.

Les glissières, notamment pour sièges de véhicules automobiles terrestres étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit on utilise toujours un même numéro de référence pour identifier un élément homologue quel que soit le mode de réalisation ou sa variante d'exécution.

Pour la commodité de l'exposé, on décrira successivement chacun des constituants d'une glissière perfectionnée à condamnation selon l'invention avant d'en exposer au besoin la fabrication, et le montage et le fonctionnement.

Une glissière perfectionnée à condamnation selon l'invention comprend, essentiellement, notamment un élément 10 fixe, un élément 20 mobile, un verrou 30, un dispositif de condamnation 40 et une commande 50.

L'élément fixe 10 et l'élément mobile 20 sont aptes à coulisser relativement l'un à l'autre selon une direction 100 de translation.

L'élément fixe 10 se présente de préférence à la manière d'une coulise en forme de C, en section droite, avec une fente 101 longitudinale. Pour les raisons que l'on comprendra par la suite, l'une des faces intérieures en regard de l'un des côtés du C sert de chemin de guidage 102, par exemple de roulement.

L'élément mobile 20 se présente à la manière d'un curseur-support. Il comprend une platine 21 qui reçoit un fourreau 22 creux longiligne qui est terminé à l'une de ses extrémités par une embouchure 220. Pour les raisons qui apparaîtront par la suite, le fourreau 22 est engagé dans la fente 101 de l'élément fixe 10 de manière que son embouchure soit dirigée à l'opposé de la fente. Le curseur-support comprend aussi un palier 23. Ce palier est fait, par exemple, d'un roulement à billes ou similaire dont la bague intérieure est, par exemple, montée à l'extrémité du fourreau proche de son embouchure et sertie, et dont la bague extérieure roule sur le chemin de guidage. Ce curseur-support comprend aussi des sabots 24 et s'il y a lieu un capot 200. Les sabots 24 servent à appliquer le palier ou roulement contre le chemin de guidage afin qu'il y circule sans jeu notable. Ces sabots sont faits par exemple en une matière synthétique dite "demi-dure" afin de présenter une certaine élasticité.

Le verrou 30 comprend, essentiellement, notamment une gâche 31, un pène 32 et une sollicitation élastique 33. La gâche 31 est associée à l'élément fixe 10. Cette gâche 31 se présente, par exemple, à la manière d'encoches ou de crans 311 de préférence rectangulaires équidistants de pas donné, disposés en une rangée parallèle à la direction de translation 100 et, de préférence, ménagés sur celui des côtés du C de la coulisse qui sert de chemin de guidage 102. Le pène 32 qui coopère avec la gâche 31 pour s'y verrouiller ou s'en déverrouiller, est mobile dans un plan. Le pène est mobile d'une part pratiquement orthogonalement à la direction 100 entre une position verrouillée où il est en prise avec la gâche 31 et une position déverrouillée où il est dégagé de la gâche 31. Le pène est d'autre part mobile dans ce plan parallèlement à cette direction lorsque à la fois il est en position déverrouillée et est aussi accouplé à l'élément mobile, comme on le comprendra par la suite, afin d'être déplacé avec lui de manière à pouvoir servir de butée de position réglable à l'élément mobile lorsqu'il est en position verrouillée et aussi désaccouplé de ce dernier, comme on l'exposera par la suite. Le pène 32 se présente par exemple à la manière d'un levier qui est apte à basculer et aussi à coulisser grâce à des patins 325. Le pène 32 est muni d'au moins une dent 321 et de préférence deux, qui sont aptes à coopérer avec les encoches ou crans 311 de la gâche de manière que lorsqu'elles sont engagées et en prise, le pène est verrouillée sur la gâche du verrou. Le pène 32 est aussi muni d'un loquet 322, d'une butée 323 et d'un logement 324 sur lesquels on reviendra par la suite. On observera que le loquet se présente à la manière d'une languette et la butée à la manière d'une patte dégagée par un crevé. Le verrou 30 comprend aussi une sollicitation élastique 33 tel un ressort de rappel à lame 331 qui maintient le pène 32 normalement engagé et verrouillé sur la gâche 31 et qui suit le pène dans ses déplacements.

Tout ceci est clairement illustré sur les figures du dessin.

Le dispositif de condamnation 40 comprend un organe 41 mâle mobile, monté sur l'élément mobile 20 et un organe 42 femelle complémentaire de l'organe mâle 41 et porté par l'élément fixe 10. Le dispositif de condamnation 40 comprend aussi une came 43 de préférence double, par exemple en forme de cloche symétrique, portée par le fourreau 22 et une contre-came 44 de préférence double, par exemple en V, coopérant avec la came 43. Le dispositif de condamnation 40 comprend aussi une sollicitation élastique 45 et une sécurité 46. L'organe mâle 41 se présente de préférence à la manière d'une broche 410 orthogonale à la direction de translation 100 et mobile entre une position en saillie de condamnation où elle est à la fois en prise avec l'organe femelle 42 de l'élément fixe 10 et accouplée au pène 32 verrouillé, une position en retrait intermédiaire, entraîneur, de réglage où elle est à la fois séparée de l'organe femelle 42 de l'élément fixe 10 et accouplée au pène 32 déverrouillé, et une position escamotée d'effacement où elle est à la fois séparée de l'organe femelle 42 de l'élément fixe 10 et désaccouplée du pène 32 verrouillé. Cette broche mobile à la fois en rotation et en translation est engagée dans le fourreau creux 22. L'une 411 des extrémités de la broche 410 est munie d'un embout 4110 destiné à coopérer avec le logement 324 du pène 32 et avec l'organe femelle 42 de la coulisse de l'élément fixe 10. L'organe femelle 42 se présente, de préférence, à la manière d'alvéoles 421 par exemple circulaires équidistants de pas déterminé, disposés en une rangée parallèle à la direction de translation 100 et ménagée sur le côté du C de la coulisse opposé à la fente 101. Pour les raisons qui apparaîtront par la suite, le pas des alvéoles est égal à celui des encoches ou crans divisé par le nombre de dents du pène. L'autre 412 des extrémités de la broche 410 est munie d'un plateau 4120. Ce plateau 4120 porte la contre-came 44, est équipé d'un téton 4121 ou similaire et est transpercé d'un trou 4122 ou analogue pour les raisons indiquées par la suite. Entre ses extrémités 411 et 412, la broche 410 est munie d'une surface d'appui 413 destinée à coopérer avec la sollicitation élastique 45 tel un ressort 451 à boudin à spires hélicoïdales. La sécurité 46 comprend un volet 461 et des moyens de manoeuvre 462. Le volet 461 est monté mobile de manière à pouvoir se déplacer devant l'embouchure 220 entre une position active où il occulte celle-ci, et une position inactive où il la démasque. De préférence, le volet 461 est monté basculant sur une cheville 4611 ou analogue, fixée sur la platine 21 du curseur-support de l'élément mobile 20. Les moyens de manoeuvre 462 comprennent un ergot 4621, doigt ou similaire porté par le volet 46, une rampe 4622 destinée à coopérer avec l'ergot 4621 et ménagée sur le pène 32. Cette rampe 4622 se présente par exemple à la manière d'un Z aplati et borgne, avec un plan incliné évasé à son entrée. Un système de rappel 4623 tel un ressort en épingle à cheveux agit sur le volet 461 de manière à le maintenir normalement dans sa position active où il occulte l'embouchure 220.

Tout ceci est clairement illustré sur les figures du dessin auxquelles on se reportera.

La commande 50 est de préférence double. Elle comprend une première partie 51 qui permet d'assurer le réglage longitudinal de l'élément mobile 20 par rapport à l'élément fixe 10, de manière à adapter la position du siège aux souhaits de son occupant. Elle comprend une deuxième partie 52 qui permet d'avancer l'élément mobile 20 relativement à l'élément fixe 10 à l'extrémité de sa course de translation, de manière à rapprocher le siège du tableau de bord pour l'effacer et faciliter l'accès à ce qui se trouve à l'arrière du siège. Lorsque la première partie 51 de la commande 50 agit par l'intermédiaire d'une timonerie 510 ou similaire, elle actionne par exemple par l'entremise d'une palette en équerre, d'une part le loquet 322 du pène 32 et le téton 4121 du plateau 4120 porté par la broche 410 de l'élément mâle 41 du dispositif de condamnation. De la sorte, le pène est déverrouillé de la gâche à l'encontre du couple développé par son ressort de rappel et la contre-came subit une petite rotation qui fait passer la broche de sa position saillante de condamnation où son embout est engagé à la fois dans un alvéole de la coulisse de l'élément fixe et dans le logement du pène, à sa position en retrait intermédiaire où l'embout est séparé de l'alvéole de l'élément fixe dans lequel il était engagé tout en demeurant accouplé au pène en restant dans le logement de ce dernier.

Lorsque la deuxième partie 52 de la commande agit par l'intermédiaire d'une transmission 520, elle opère par exemple par l'entremise d'une tringle engagée dans le trou du plateau, seulement sur le téton 4121 pour communiquer une grande rotation à la contre-came. De la sorte, l'embout de la broche passe de sa position en saillie de condamnation à sa position escamotée d'effacement où il est à la fois dégagé de l'alvéole dans lequel il était engagé et désaccouplé du logement du pène qui lui est laissé dans sa position normale verrouillée sous l'action du couple développé par son ressort de rappel.

Tous les constituants d'une glissière perfectionnée à condamnation selon l'invention sont fabriqués dans des matériaux classiques, métalliques et/ou synthétiques, travaillés et mis en forme selon des techniques habituelles appropriées. Tous ces constituants sont réunis, assemblés et montés comme cela ressort clairement des figures du dessin.

On rappellera seulement que pour le cas de l'application d'une glissière perfectionnée à condamnation selon l'invention à un siège de véhicule automobile, on fait en sorte que l'élément fixe en forme de C de la coulisse est maintenu sur le sol ou plancher du véhicule par des moyens de fixation appropriés tels des vis, des boulons ou des goujons, de manière que le côté du C opposé à la fente soit pratiquement vertical et que le côté du C qui porte les crans ou encoches de la gâche soit pratiquement horizontal et proche de ce sol ou plancher. Cet élément fixe est orienté en outre de manière que sa direction de translation soit parallèle à l'axe longitudinal du véhicule. On utilise habituellement deux glissières par siège ou banquette, que ce soit pour les sièges avant ou arrière si nécessaire, et il suffit que l'une d'entre elles soit conforme à la glissière perfectionnée à condamnation selon l'invention. Lorsqu'on utilise deux glissières selon l'invention orientées parallèlement elles peuvent être décalées longitudinalement relativement l'une à l'autre; dans une telle situation la commande est adaptée en conséquence.

L'élément mobile curseur-support 20 est relié à l'armature A du siège qui est conçue par exemple pour résister aux efforts dûs en particulier aux ancrages d'une ceinture de sécurité embarquée. Une armature qui convient est par exemple décrite dans le document FR- 2 637 241.

Comme il est habituel, la première partie 51 de la commande qui permet le réglage de la position longitudinale du siège est munie d'une poignée de manoeuvre située souvent à proximité de l'assise du siège, sur le devant ou un côté de celui-ci. La deuxième partie 52 de la commande qui permet une avancée du siège en direction de la planche de bord pour son effacement afin de faciliter l'accès à l'arrière de lui est munie d'une tirette de manoeuvre située souvent comme il est classique sur le côté extérieur du dossier du siège qui est habituellement aussi rabattable en direction de l'assise.

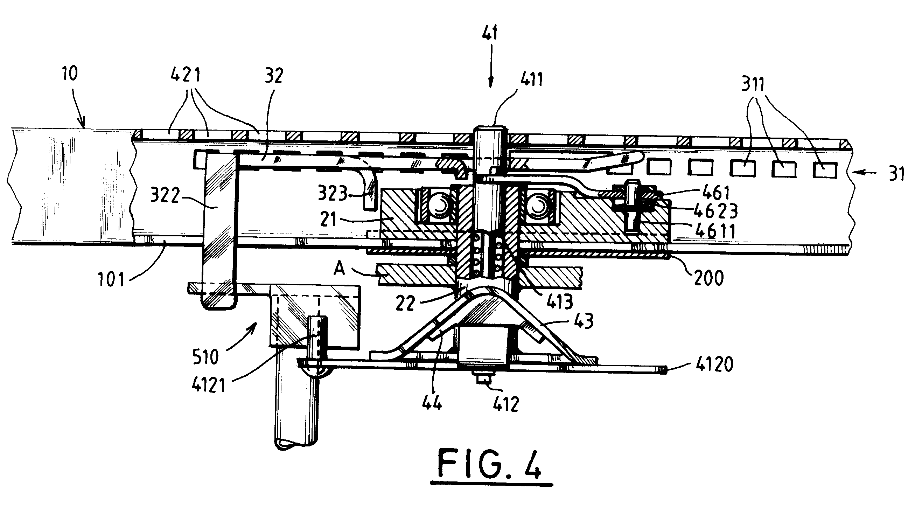

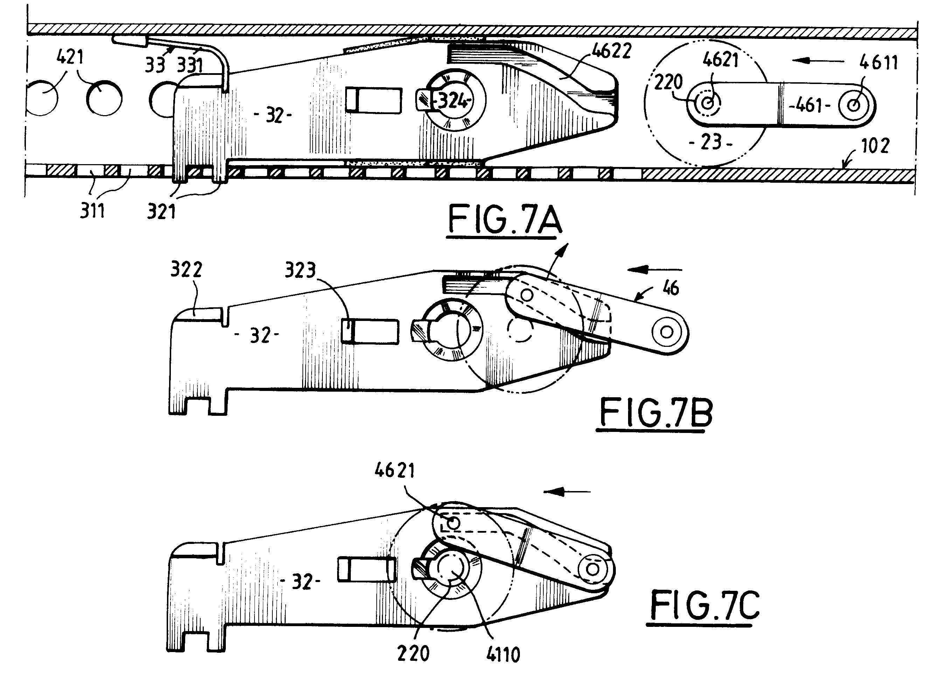

On suppose que la glissière perfectionnée à condamnation selon l'invention est initialement dans la position illustrée sur la Figure 4 et la Figure 7C. Cette situation est celle qui existe quand un occupant prend normalement place sur un siège. On voit que dans cette situation le verrou est en position telle que son pène est verrouillé sur la gâche. On voit aussi que, simultanément, le dispositif de condamnation occupe une situation qui bloque le pène verrouillé et l'accouple à l'élément mobile du fait que l'embout de la broche de l'élément mâle est simultanément engagé dans un alvéole de l'organe femelle correspondant de la coulisse de l'élément fixe et dans le logement du pène. La broche occupe sa position en saillie de condamnation.

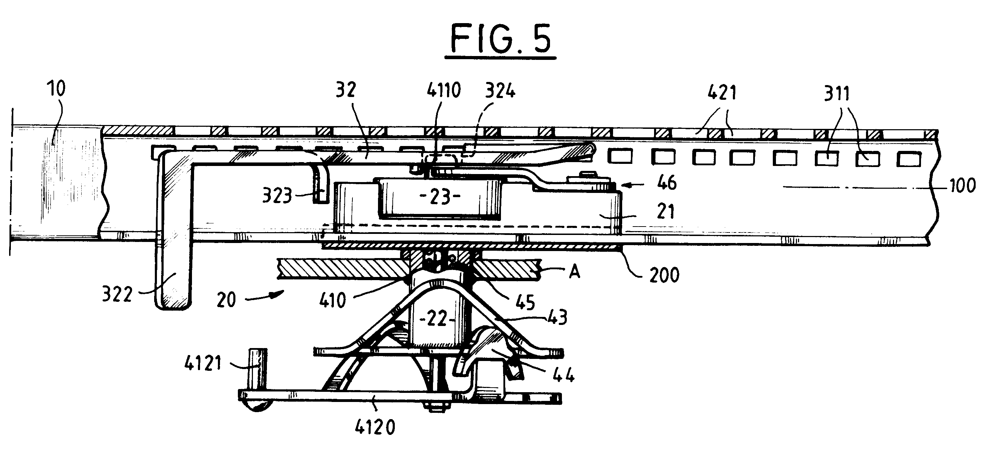

Si maintenant l'occupant du siège souhaite modifier la position longitudinale de celui-ci, il agit sur la poignée de manoeuvre de la première partie de la commande. La glissière passe alors de la position où elle est illustrée sur la Fig. 4 à celle où elle est illustrée sur la Fig. 5. On voit alors que du fait de la coopération de la came et de la contre-came, d'une part la broche tourne d'un premier angle et simultanément recule pour passer de sa position en saillie de condamnation antérieure, à sa position de retrait intermédiaire, et d'autre part qu'aussi le pène actionné par son loquet s'est déverrouillé de la gâche à l'encontre du couple de son ressort de rappel qui agit normalement sur lui. L'embout s'est dégagé de l'alvéole dans lequel il était engagé mais reste en prise avec le logement du pène. L'embout sert en quelque sorte d'axe de rotation au levier qui peut alors basculer pour se déverrouiller de la gâche. On observe que l'embout restant dans le logement du pène, le pène demeure accouplé à l'élément mobile. Lorsqu'on fait coulisser le siège, dans un sens ou dans l'autre comme il est classique, le pène déverrouillé suit donc l'élément mobile jusqu'à ce que le siège a atteint la nouvelle position recherchée. Lorsqu'on relâche la poignée de manoeuvre de la première partie de la commande, le pène se reverrouille spontanément sur la gâche et l'embout s'engage automatiquement de nouveau dans un nouvel alvéole puisque le pas de la rangée d'alvéoles et celui de la rangée d'encoches ou de crans sont les mêmes ou un multiple, si le pène est muni d'un nombre de dents supérieur à un.

Dans toutes les positions précédentes, on a pu observer que la butée 323 du pène reste au contact de l'élément mobile curseur-support, par exemple au contact de sa platine 21. De même, le volet est maintenu dans sa position inactive où il démasque l'embouchure que traverse la broche du fait de l'engagement de l'ergot dans la rampe à proximité de son bout borgne qui le retient à l'encontre de la sollicitation élastique, comme cela est illustré sur la Fig. 7C.

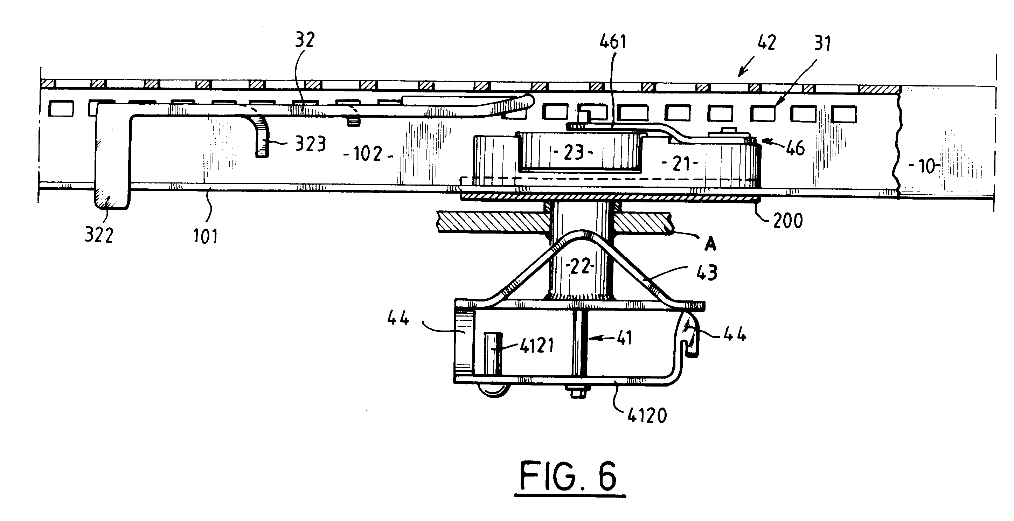

Si maintenant on souhaite accéder à ce qui se trouve à l'arrière d'un siège, on agit sur la tirette de manoeuvre de la deuxième partie de la commande. En faisant ceci, la glissière perfectionnée à condamnation selon l'invention passe de la position où elle est illustrée sur la Fig. 4 à celle où elle est illustrée sur la Fig. 6. Du fait de la coopération de la came et de la contre-came, seule la broche tourne d'un second angle plus grand que le premier, et simultanément recule davantage pour passer de sa position en saillie de condamnation à sa position escamotée d'effacement. On voit alors que l'embout de la broche s'est dégagé de l'alvéole dans lequel il était engagé et aussi du logement du pène. Le pène lui reste normalement verrouillé sur la gâche sous l'action du couple de son ressort de rappel mais se trouve désaccouplé de l'élément mobile curseur-support. Lorsqu'on déplace le siège pour lui faire prendre sa position avancée d'effacement à l'extrémité de la course de la glissière, le volet passe progressivement de la position où il est illustré sur la Fig. 7C à celle où il est illustré sur la Fig. 7A. On voit que le volet a pris automatiquement sa position active où il occulte l'embouchure interdisant ainsi à l'embout de la broche de sortir éventuellement du fourreau. A aucun moment de cette course vers l'avant, l'embout ne peut s'engager dans un des alvéoles de la rangée devant laquelle il défile, même si on relâche la tirette de manoeuvre de la deuxième partie de la commande. Lorsqu'on souhaite replacer le siège dans sa position initiale, on le fait reculer. Au cours de son recul, le volet précédemment rappelé automatiquement dans sa position active est placé d'une manière telle que son ergot rencontre l'entrée évasée de la rampe du pène située sur sa trajectoire et s'y engage. En suivant la rampe, l'ergot entraîne le volet progressivement de la position où il est illustré sur la Fig. 7A à celle où il est illustré sur la Fig. 7C. Le volet reprend donc sa position inactive où il démasque l'embouchure. A ce moment, l'élément mobile rencontre la butée du pène demeuré verrouillé en place, et cette butée l'arrête. La broche n'est plus entravée par le volet et peut donc s'engager de nouveau d'abord dans le logement du pène puis dans l'alvéole correspondant pour reprendre la position illustrée sur la Fig. 4.

On voit donc tous les avantages apportés par la glissière perfectionnée à condamnation suivant l'invention puisque l'élément mobile est verrouillé et bloqué sur l'élément fixe par le pène du verrou engagé dans la gâche et par la broche qui condamne l'élément mobile sur l'élément fixe au travers du pène.

On observera aussi que pratiquement la totalité des constituants qui assure la condamnation sont logés à l'intérieur de l'élément fixe et qu'ils améliorent la résistance aux efforts qu'a à subir et transmettre la glissière en cas de choc important à grande composante longitudinale.

On comprend donc que le pène sert en quelque sorte de mémoire et reste verrouillé pendant le coulissement du siège vers l'avant pour son effacement afin de servir de butée et qu'il ne peut donc se dérégler accidentellement, ce qui assure de toujours retrouver la position initiale.

Ce qui précède permet de saisir tout l'intérêt de l'invention et les avantages qu'elle apporte.

## Revendications

1. Glissière, notamment pour siège de véhicule automobile, comprenant un élément (10) fixe et un élément (20) mobile aptes à coulisser relativement selon une direction (100) de translation, un verrou (30) avec une gâche (31) qui est associée à l'élément fixe (10) et avec un pène (32) qui coopère d'une part avec la gâche (31) pour s'y verrouiller ou s'en déverrouiller et d'autre part avec l'élément mobile (20) pour s'y accoupler ou s'en désaccoupler et qui est mobile dans un plan d'une part pratiquement orthogonalement à cette direction (100) entre une position normalement verrouillée où il est en prise avec la gâche (31) et une position déverrouillée où il est dégagé de la gâche (31) et, d'autre part, parallèlement à cette direction (100) lorsqu'il est à la fois en position déverrouillée et accouplé à l'élément mobile (20) afin d'être déplacé avec lui (20) de manière à pouvoir servir de butée réglable à l'élément mobile (20) lorsqu'il (32) est à la fois en position verrouillée et désaccouplé de ce dernier (20), une commande (50) reliée à l'élément mobile (20) et agissant sur le pène (32) de manière à volonté pouvoir déverrouiller le pène (32) normalement verrouillé sur la gâche (31) et pouvoir accoupler et désaccoupler le pène (32) et l'élément mobile (20), glissière caractérisée en ce qu'elle comprend un dispositif de condamnation (40) apte à coopérer avec l'élément fixe (10) et avec le pène (32) pour bloquer le pène (32) lorsqu'il est à la fois verrouillé sur la gâche (31) et accouplé à l'élément mobile (20).

2. Glissière selon la revendication 1, caractérisée en ce que le dispositif de condamnation (40) est porté pour partie par l'élément mobile (20) et pour partie par le pène (32) et comprend un organe (41) mâle mobile monté sur l'élément mobile (20) et un organe (42) femelle complémentaire de l'organe mâle (41) et porté par l'élément fixe (10).

3. Glissière selon la revendication 2, caractérisée en ce que l'organe mâle (41) est une broche (410) orthogonale à la direction de translation (100) et mobile entre une position en saillie de condamnation où elle est à la fois en prise avec l'organe femelle (42) de l'élément fixe (10) et accouplée au pène (32) verrouillé, une position en retrait intermédiaire de réglage où elle est à la fois séparée de l'organe femelle (42) de l'élément fixe (10) et accouplée au pène (32) déverrouillé et une position escamotée d'effacement où elle est à la fois séparée de l'organe femelle (42) de l'élément fixe (10) et désaccouplée du pène (32) verrouillé.

4. Glissière selon l'une quelconque des revendications 1 à 3, caractérisée en ce que le pène (32) est un levier apte à coulisser et à basculer dans un plan parallèle à la direction de translation (100).

5. Glissière selon l'une des revendications 2 à 4, caractérisée en ce que le pène (32) est pourvu d'un logement (324) qui sert à définir son axe de basculement.

6. Glissière selon l'une quelconque des revendications 2 à 5, caractérisée en ce que l'organe femelle (42) se présente à la manière d'alvéoles (421) et en ce que l'organe mâle (41) du dispositif de condamnation (40) coopère avec au moins un alvéole (421) de l'élément fixe (10) pour bloquer le pène (32) lorsqu'il est à la fois verrouillé sur la gâche (31) et accouplé à l'élément mobile (20).

7. Glissière selon la revendication 6, caractérisée en ce que l'alvéole (421) est situé dans un plan parallèle au plan de déplacement du pène (32).

8. Glissière selon l'une quelconque des revendications 1 à 7, caractérisée en ce que l'élément fixe (10) est une coulisse en forme de C en section droite avec une fente (101) longitudinale et dont l'un des côtés voisin de celle-ci (101) est muni de la gâche (31).

9. Glissière selon la revendication 8, caractérisée en ce que la gâche (31) est faite d'encoches (311) équidistantes de pas donné disposées en une rangée parallèle à la direction de translation (100).

10. Glissière selon l'une quelconque des revendications 6 à 9, caractérisée en ce qu'elle comprend des alvéoles (421) équidistants de pas déterminé disposés en une rangée parallèle à la direction de translation (100).

11. Glissière selon l'une quelconque des revendications 8 à 10, caractérisée en ce que les alvéoles (421) sont ménagés sur le côté de la coulisse en forme de C de l'élément fixe (10) qui est opposé à la fente (101) et en ce que leur pas est en relation avec celui des encoches (311).

12. Glissière selon l'une quelconque des revendications 8 à 11, caractérisée en ce que l'élément mobile (20) est un curseur support avec une platine (21) portant un fourreau (22) creux qui est engagé dans la fente (101) de l'élément fixe (10) et qui est terminé par une embouchure (220) à l'opposé de celle-ci (101) et dans lequel se déplace l'organe mâle (41) du dispositif de condamnation (40).

13. Glissière selon la revendication 12, caractérisée en ce que l'organe mâle (41) en broche (410) comprend à l'une (411) de ses extrémités un embout (4110) apte à coopérer avec le logement (324) du pène (32) et avec les alvéoles (421) de l'élément fixe (10) et à l'autre (412) de ses extrémités un plateau (4120).

14. Glissière selon la revendication 13, caractérisée en ce que le dispositif de condamnation (40) comprend une broche (410) qui est mobile en rotation et en translation, une came (43) en cloche portée par le fourreau (22), une contre-came (44) coopérant avec la came (43) et portée par le plateau (4120) et une sollicitation élastique (45) qui maintient la contre-came (44) appliquée contre la came (43).

15. Glissière selon la revendication 14, caractérisée en ce que le dispositif de condamnation (40) comprend une sécurité (46) avec un volet (461) obturateur mobile devant l'embouchure (220) entre une position active où il occulte celle-ci (220) et une position inactive où il la démasque, et des moyens (462) de manoeuvre pour faire passer le volet obturateur (461) de sa position active à sa position inactive.

16. Glissière selon la revendication 15, caractérisée en ce que le dispositif de condamnation (40) comprend des moyens de manoeuvre (462) avec un ergot (4621) monté sur le volet obturateur (461), avec une rampe (4622) portée par le pène (32) et coopérant avec l'ergot (4621) et avec un système de rappel (4623) agissant sur le volet obturateur (461) pour le maintenir normalement dans sa position active.

17. Glissière selon l'une quelconque des revendications 14 à 16, caractérisée en ce qu'il comprend une commande (50) et en ce que la commande (50) comprend une première partie (51) qui communique une petite rotation à la contre-came (44) pour faire passer la broche (410) de sa position en saillie de condamnation à sa position en retrait intermédiaire et pour faire passer le pène (32) de sa position verrouillée à sa position déverrouillée, et une seconde partie (52) qui communique une grande rotation à la contre-came (44) pour faire passer la broche (410) de sa position en saillie de condamnation à sa position escamotée d'effacement tout en laissant le pène (32) dans sa position verrouillée.
